# EUROPEAN PATENT SPECIFICATION

(11) **EP 0 717 368 B1**
(45) Date of publication and mention of the grant of the patent: **04.10.2001**
(21) Application number: 95309090.9
(22) Date of filing: 13.12.1995
(51) Int. Cl.: G06K 11/18

(54) **Digitizer stylus and method of operation**
Digitalisierstift und Betriebsverfahren
Crayon à digitaliser et méthode d'exploitation

(30) Priority: 16.12.1994 US 358213
(43) Date of publication of application: 19.06.1996
(73) Proprietor: HYUNDAI ELECTRONICS AMERICA, Milpitas, California 95035 (US)
(72) Inventor: Trunck, Bruce R., Monument, CO 80932 (US); Skoog, Steven K., Colorado Springs, CO 80917 (US)
(74) Representative: Gill, David Alan

(56) References cited:
- EP-A- 0 615 209
- EP-A- 0 622 724

## Description

The present invention relates to a digitizer stylus and method of operation.

The present invention is also related to the subject matter of the European patent application EP-A-0 717 367.

The invention concerns the transmission of information from a stylus, used with a digitizing tablet, to a system which processes the information.

Pen-based portable computers contain digitizing tablets, usually associated with the computer's display screen, and by which a user can enter information by way of a stylus. The stylus transmits a position signal, by which the computer ascertains the position of the stylus.

EP-A-0 622 724, which represents the basis for the preamble of claim 1, discloses a stylus apparatus for providing electrical data signal comprising memory means for storing data and also means for converting the stored data into a serial bit stream and EP-A-0 615 209 discloses a stylus of which is for providing electrical data signal and which includes a memory means for storing data and interface means for allowing a user to program the memory. However, the subject matter of these two aforementioned patent applications is restricted to operation in the manner indicated.

The invention seeks to provide for a stylus apparatus and method having advantages over known methods and apparatus.

In accordance with one aspect of the present invention there is provided stylus apparatus for providing an electrical data signal and including memory means for storing data and means for converting the stored data into a serial bit stream, characterized in that the memory is arranged to contain a multi-bit word indicating battery condition.

In addition to the transmission of a position signal, the stylus of the present invention can advantageously transmit other data indicative of operating conditions of the stylus.

The invention is advantageous in providing for an improved stylus for use with a digitizing tablet.

The invention can also provide for such a stylus which contains memory, and which transmits the contents of its memory to a receiver.

Preferably said means for converting comprises logic means. Advantageously said memory means comprises pre-programmed memory means.

In one form of the invention, a stylus, of the type commonly used in pen-based computers, can contain memory which stores information such as battery condition or a serial number of the stylus. The stylus can read the memory, and forward the memory contents to its associated computer by telemetry.

According to another aspect of the present invention there is provided a method of operating a stylus, characterized by steps of;
a) storing data elements indicative of battery condition and any one of the following:
   (i) an identification number,
   (ii) a colour,
   (iii) pressure transducer output;
b) for each piece of data, generating a packet pair, comprising serial data representing the piece of data and an identification packet; and
c) repeatedly applying the packet pairs, separated by packet demarcation code, to the tip of said stylus.

The invention can also provide for a stylus for use with a digitizing tablet, such as that associated with the display of a portable computer. The stylus contains memory means which stores data such as its operating state (i.e., states of user-controlled buttons, state of charge of battery), a stylus identification code, and fault codes, which indicate error conditions which may arise and in which the stylus transmits the contents of the memory means, by a serial bit stream, to the computer.

The invention is described further hereinafter, by way of example only, and reference to the accompanying drawings in which:
Fig. 1 illustrates a portable computer and a stylus;
Fig. 2 is a more detailed schematic of a stylus embodying the present invention;
Fig. 3 illustrates several components contained within a stylus embodying the present invention;
Fig. 4 illustrates apparatus for sensing condition of the battery within the stylus of Fig. 3;
Fig. 5 illustrates parallel-to-serial conversion of data stored within a stylus embodying the present invention;
Fig. 6 illustrates apparatus for the generation of a carrier, which is amplitude-modulated, in order to carry the serial data of Fig. 5.
Fig. 7 illustrates storage of multiple-bit words within the stylus, and generation of serial data packets for each word;
Fig. 8 illustrates logic for generating serial packets from the words stored in the memory;
Fig. 9 illustrates a DIP switch which can be used to program memory within the stylus; and

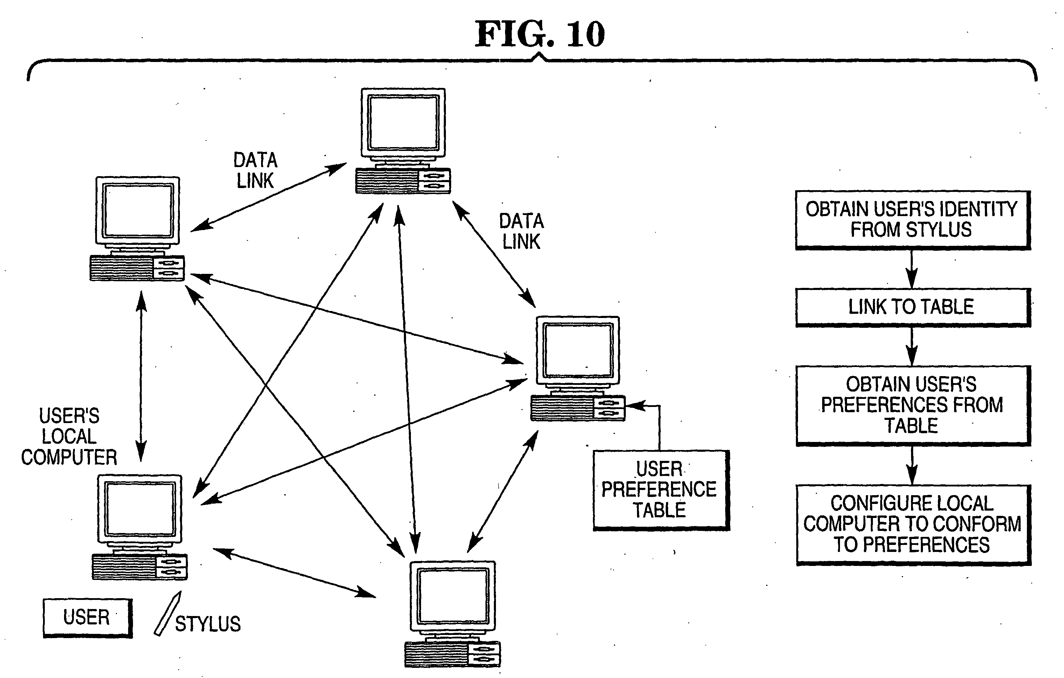

Fig. 10 illustrates a plurality of computers arranged for operation in accordance with the present invention.

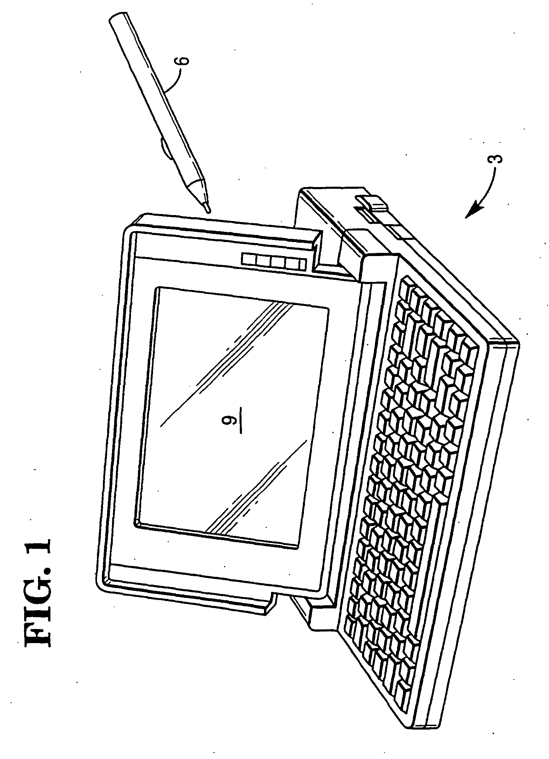

Fig. 1 illustrates a portable computer 3 having a display 9 and associated with a cordless stylus 6. An operator of the computer 3 uses the stylus 6 to draw or write upon the display 9, as though the stylus were a pencil or pen etc. The stylus 6 transmits signals by which the computer 3 can ascertain the position of the stylus 6.

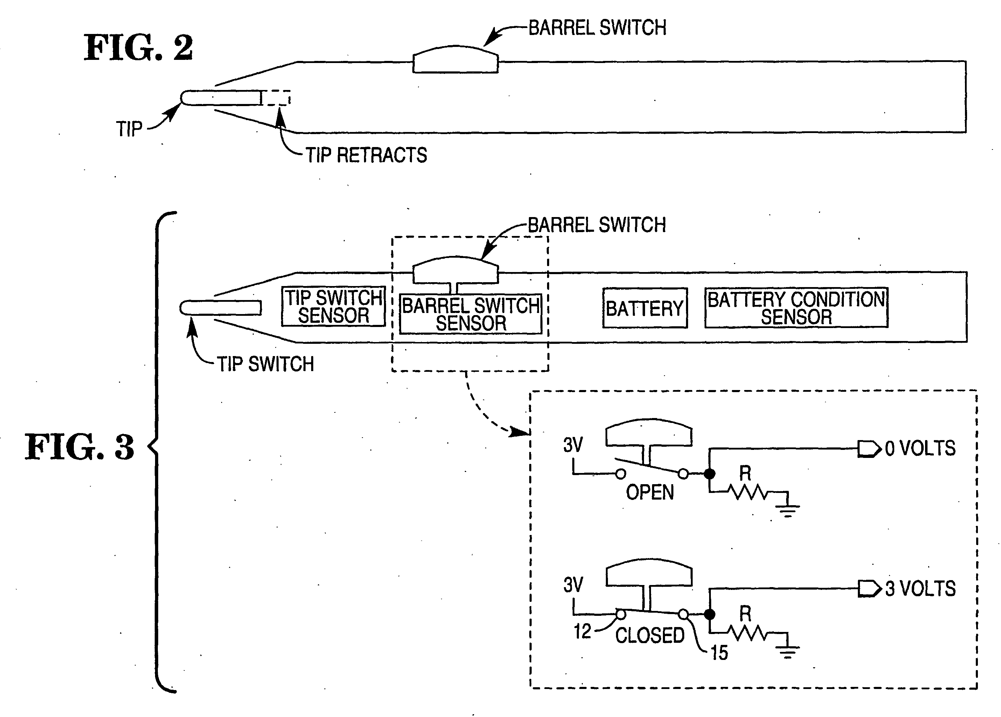

Fig. 2 is a schematic which shows greater detail of the stylus of Fig. 1. The stylus contains registers which store data. Three types of such data are the following.

One type indicates the status of a barrel switch, located on the barrel of the stylus. When this switch is depressed, a sensor, such as that indicated in Fig. 3, detects the depression of the switch. In the sensor, two switch contacts 12 and 15 are forced together, pulling one end of the resistor R to 3 volts, and so providing the three-volt signal indicated.

Another type of data indicates the status of a tip switch. When the user presses the stylus against the display 9, the TIP is forced to retract. The retracted position is indicated in Fig. 2. A sensor, which can be similar to that shown in Fig. 3, detects the retraction, and issues a signal.

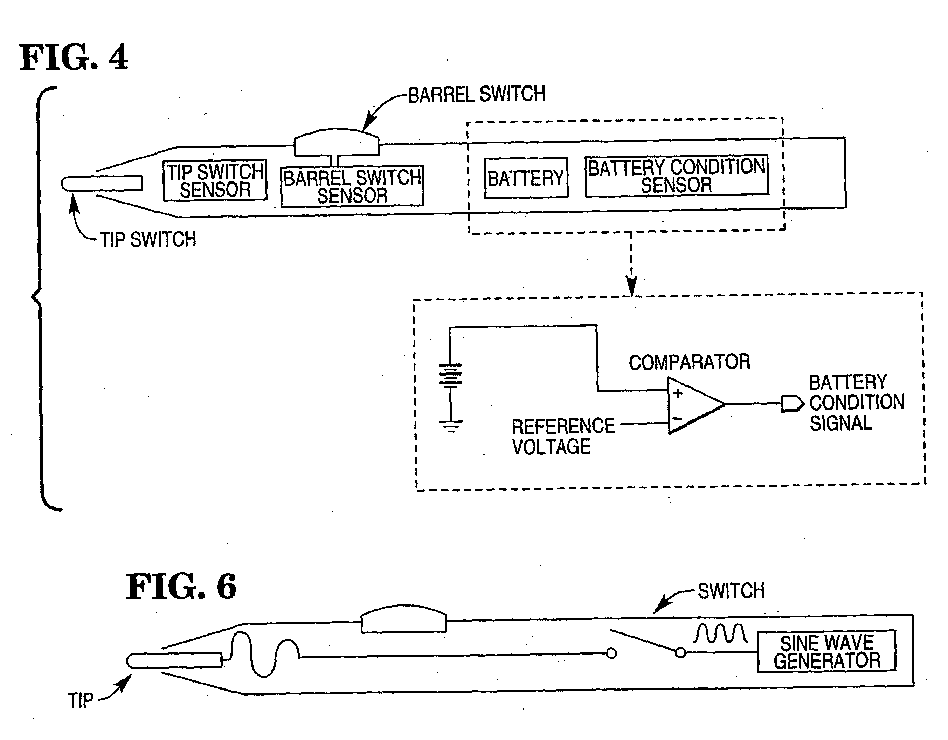

A third type indicates battery condition. The stylus is powered by one or more electrical batteries. Such a battery is shown in Fig. 4. The stylus contains a comparator, which compares the battery voltage with a reference voltage. When the battery voltage falls below the reference voltage the output of the comparator switches state, thereby producing a battery-condition signal.

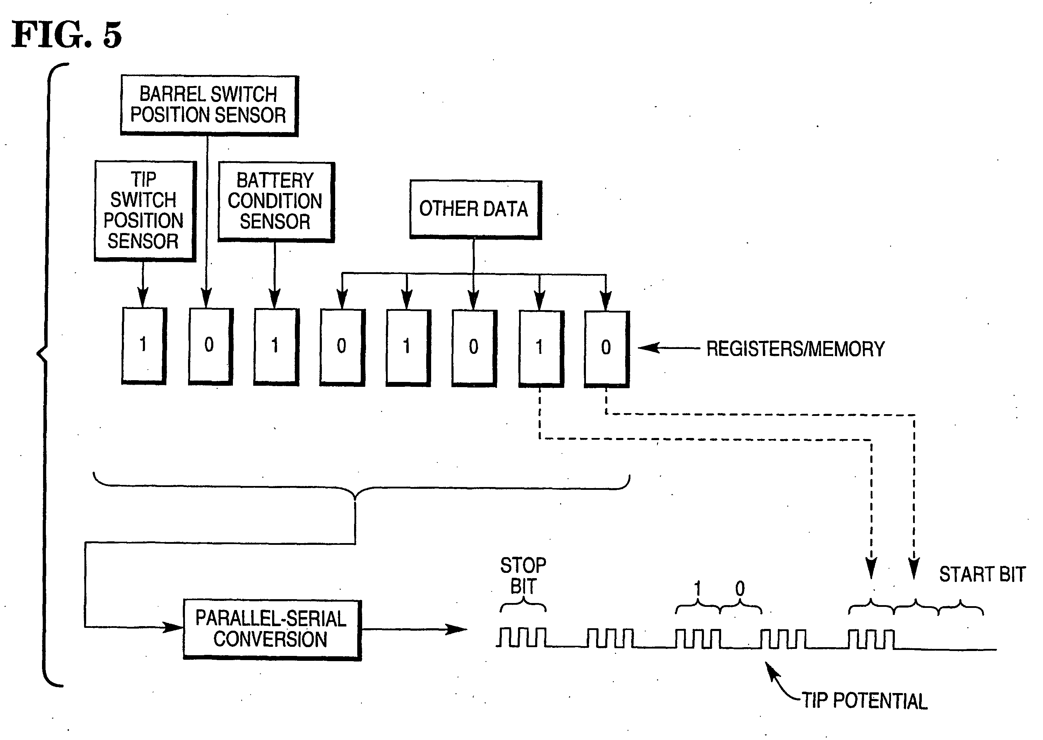

Three stylus signals have been discussed, namely, tip switch status, barrel switch status, and battery condition. The sensors producing these signals feed registers, or other memory means, which hold them, as shown in Fig. 5. It should of course be noted that registers are not necessarily required in all cases. For example, if a signal is produced by a switch closure, as in Fig. 3, the closed switch itself acts as a register. Other types of data, discussed later, can also be held in the other registers, as indicated in Fig. 5 by the block OTHER DATA.

The block in Fig. 5 termed PARALLEL-SERIAL CONVERSION reads each register and produces a serial bit stream based on the register contents, as indicated in Fig. 5. For example, the right-most bit, the 0 labeled OTHER DATA, corresponds to the 0 in the serial stream which is adjacent the START BIT, as indicated by the dashed arrow.

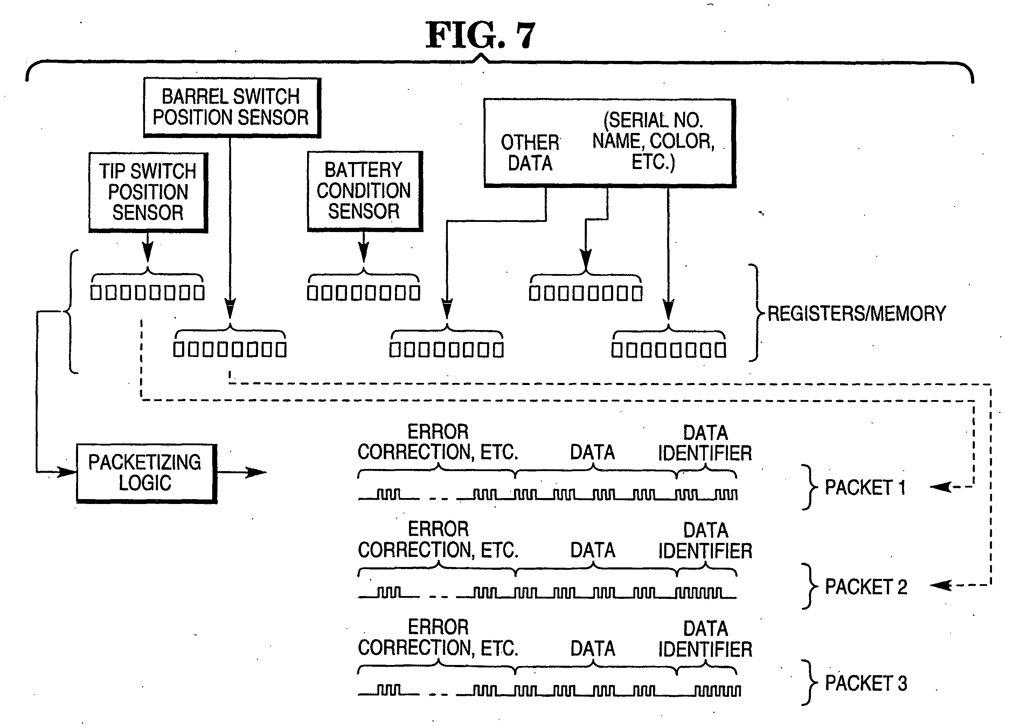

The bit stream is a pulse train which is amplitude-modulated. The pulse train can be viewed as produced by a sine wave generator shown in Fig. 6. When a logic 1 is to be produced, the switch is closed, thereby connecting the sine wave generator to the tip, thereby producing a 1 signal. A 1 signal is indicated in the serial bit stream of Fig. 5.

The tip is capacitively coupled to the display 9 when in close proximity thereto. The 1 signal is thus detected when the tip contacts, or is close to, the display 9.

In Fig. 5, a START BIT, value 0, indicates the start of a serial bit stream. A STOP BIT, value 1, indicates the termination of a serial bit stream. The serial bit stream is preferably eight bits long, and contains one bit for each of the registers shown in Fig. 5.

In addition, other overhead bits are transmitted, along with the information packet of eight bits. These are used for such matters as error-correction.

Apparatus for (a) producing a serial bit stream, based on the data stored in the registers, (b) inserting the start and stop codes, and (c) producing error-correcting codes, is generally known in the art.

Therefore, one form of the invention has been discussed, wherein a stylus stores single-bit pieces of information. The invention transmits these bits, in serial fashion, by amplitude-modulating a sine wave train, and applying this wave train to the tip of the stylus 6.

In another form of the invention, the data stored within the stylus 6 is not limited to single-bit information. For example, the tip switch can be replaced by a pressure transducer, which produces an analog voltage, based on the downward pressure applied to the tip when a user presses the stylus 6 against the display 9 of Fig. 1.

The analog voltage can be converted to digital form, via analog-to-digital conversion stage, thus producing a multi-bit word indicative of tip switch position. This word can be stored in a register, as shown in Fig. 7, which is associated with the block TIP SWITCH POSITION SENSOR, which produces the word.

Similarly, multi-bit words can be generated indicative of the barrel switch position, and battery voltage, as indicated.

These multi-bit words are converted into packets of serial bits, again by amplitude-modulating a carrier, and applying the carrier to the tip of the stylus 6. Another piece of data is transmitted in addition to the data described in the single-bit case, namely, an identifier for the data in the packet. Fig. 7 indicates a three-bit identifier, which allows eight possible types of data to be identified.

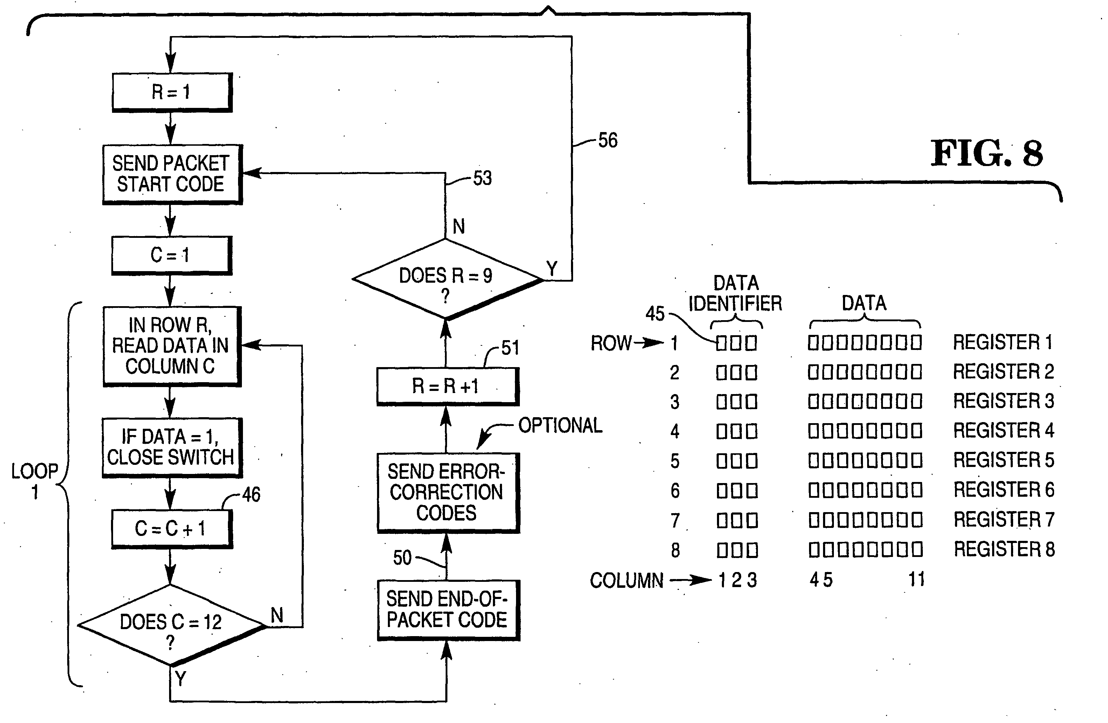

A schematic of one type of logic which implements the function indicated by the block titled PACKETIZING LOGIC in Fig. 7 is given in Fig. 8. This logic can be implemented in numerous different ways, including software running on a microprocessor, or in dedicated hardware.

The registers, together with their data identifiers, can be conceptualized as arranged in ROWs and COLUMNs, as indicated in Fig. 8. The logic arrangement continually cycles as indicated by the flow diagram of Fig. 8. It reads every bit, left-to-right, row-by-row. Each bit, as it is read, is inserted into the serial bit stream.

As an example, assume that the logic is currently reading the data at ROW 1, COLUMN 1, namely, bit 45. If the data is a ONE, the logic closes the switch in the stylus, indicated in Fig. 6, causing the pulse train to be connected to the stylus tip. That is, a 1, as shown in Fig. 5, is generated in the serial bit stream.

If the data is a 0, no action is taken, causing a 0, as shown in Fig. 5, to be generated.

Next a column index, C, is incremented, in block 46 of Fig. 8, causing the next column to be read, and a 1 or 0 to be generated for each, until the last column is read.

After the last column is read, the logic takes branch 50, which causes an end-of-packet code, such as 1111, to be sent. A row index, R, is then incremented in block 51, and the next row is read, column-by-column, by taking branch 53. If the last row, ROW 8, has just been read, then branch 56 is taken, and the process repeats, starting at ROW 1, COLUMN 1, because both R and C in the flow diagram are now re-set to 1.

The invention continually cycles through the registers, reading each and transmitting the following continuous serial stream:
[DATA IDENTIFIER, then DATA], [DATA IDENTIFIER, then DATA], etc. If desired, error correction codes can be inserted between each pair of DATA and DATA IDENTIFIER.

It should be observed that it is possible to make the end-of-packet code identical with the start-of-packet code, because the start of one packet coincides with the end of another. In this case, block 59 in Fig. 8 can be eliminated. This code can then be more generically referred to as a packet demarcation code.

It should also be observed that the data identifier can be treated as an identifier of the register storing the data.

The so-called "other data" of Fig. 7 can include the following.

1. The name of the owner of the stylus. The computer can then be programmed with the preferences of the owner, such as preferred display colours. The computer can then automatically conform to the programmed preferences when it reads the name of the owner.

Also, the computer can be programmed to allow access to certain files for only specified individuals. The name of the owner thus indicates access rights.

2. A serial number of the stylus. The serial number can be useful in tracking lost or stolen styli. Also, the serial number can be useful when a stylus is to be repaired, as under a warranty contract. The serial number allows a service technician to maintain a a separate, external, record of warranty work done on the stylus.

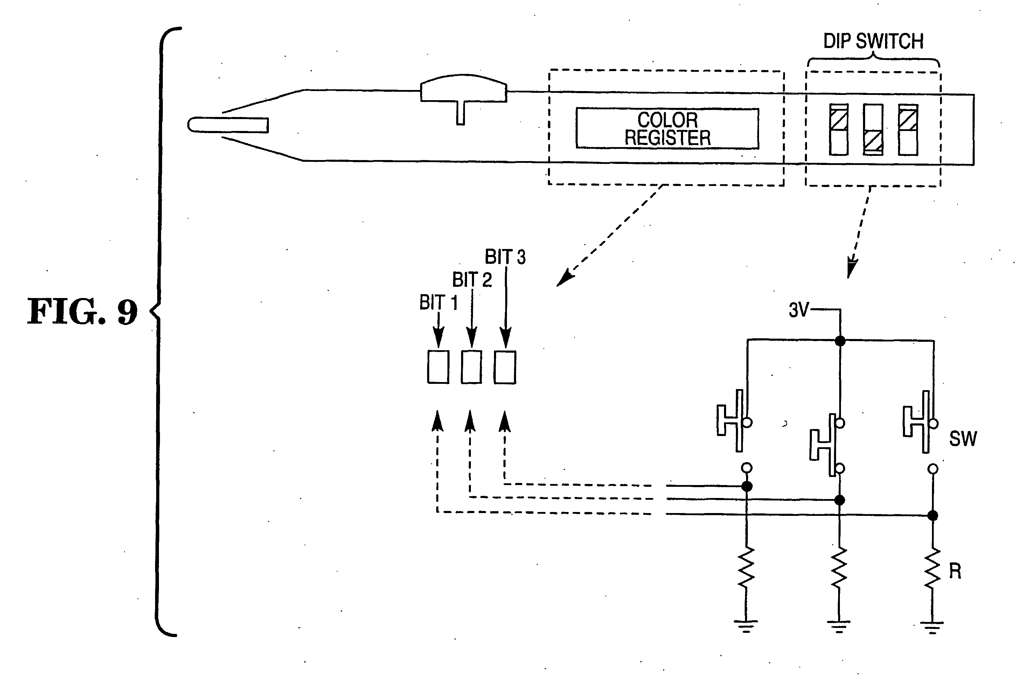

3. A colour of the stylus. When the stylus transmits its colour code, the computer draws a line in the corresponding colour, if the computer is equipped with a colour display.
The colour can be selectable by the user, through a user interface. For example, a colour register, as in Fig. 9, can actually take the form of a three-bit DIP switch, as shown. A user can program the register, and thus select a colour, by setting the DIP switches. The three DIP switches behave as three registers.

The so-called "other data" can also include fault codes, which are generated during testing of the system. For example, a control system can test the components of the stylus, using known, prior-art procedures. When a component, such as a memory element or battery sensor, is found to operate incorrectly, the control system loads a fault code identifying the defect into one of the locations labeled OTHER DATA. The fault codes are given data identifiers as in Fig. 8.

Other important considerations also apply. For example, the DIP switches act as programmable memory , whereas the barrel switch and the tip switch shown in Fig. 2 do not act as such memory. That is, even though these switches produce default signals when they are not depressed, this characteristic is not considered equivalent to programmable memory.

Restated, the BARREL SWITCH in Fig. 3 has a normal output of ZERO. A user's intervention is required to produce an output of ONE. However, when the user ceases to press on the switch, the output returns to ZERO. The BARREL SWITCH is not programmable memory.

From another point of view, there is no information stored in the BARREL SWITCH, and, consequently, it does not act as memory. That is, if you know, in advance, that a user is not pressing on the BARREL SWITCH, you automatically know the output (ZERO). The BARREL SWITCH provides no additional information.

Some of the registers are pre-programmed, and their contents do not change during use. For example, those containing the serial number and owner's name do not change.

The contents of some other REGISTERs can, however, change. For example, those containing switch statuses, pressure transducer values, and battery condition will change during use.

It will be appreciated that the invention is not restricted to the details of the foregoing embodiment and that numerous substitutions and modifications can be undertaken without departing from the scope of the invention.

## Claims

1. Stylus apparatus (6) for providing an electrical data signal and including memory means for storing data and means for converting the stored data into a serial bit stream, **characterized in that** the memory is arranged to contain a multi-bit word indicating battery condition.

2. Stylus apparatus (6) as claimed in Claim 1, and including means for transmitting the serial bit stream to a receiver.

3. Stylus apparatus (6) as claimed in Claim 1 or 2, wherein the memory is arranged to contain a multi-bit word indicating pressure applied to a tip of the stylus (6).

4. Stylus apparatus as claimed in Claim 1, or 3, wherein the memory is arranged to contain a multi-bit word indicating the state of a barrel switch of the stylus.

5. Stylus apparatus (6) as claimed in any one of the preceding claims and including memory means whose contents change during use, and wherein said means for converting is arranged to convert said contents to a serial bit stream.

6. Stylus apparatus (6) as claimed in any one of the preceding claims and including logic means for producing a sequence of serial data packets each including data from the memory and an identifier for the data.

7. Stylus apparatus (6) as claimed in Claim 6, in which said logic means is arranged to insert a packet demarcation code between each packet.

8. A method of operating a stylus, **characterized by** the steps of
a) storing data elements indicative of battery condition and any one of the following:
(i) an identification number,
ii) a colour, or
iii) pressure transducer output;
b) for each piece of data, generating a packet pair, comprising serial data representing the piece of data and an identification packet; and
c) repeatedly applying the packet pairs, separated by a packet demarcation code, to the tip of said stylus (6).

## Patentansprüche

1. Pen-Vorrichtung (6) zum Erzeugen eines elektrischen Datensignals, mit einem Speicher zum Speichern von Daten und einem Mittel zum Umwandeln der gespeicherten Daten in einen seriellen Bitstrom, **dadurch gekennzeichnet, dass** der Speicher so angeordnet ist, **dass** er ein Mehr-Bit-Wort enthält, das den Batteriezustand angibt.

2. Pen-Vorrichtung (6) nach Anspruch 1, mit einem Mittel zum Übertragen des seriellen Bitstroms zu einem Empfänger.

3. Pen-Vorrichtung (6) nach Anspruch 1 oder 2, wobei der Speicher so angeordnet ist, dass er ein Mehr-Bit-Wort enthält, das den Druck angibt, der auf eine Spitze des Pens (6) aufgebracht wird.

4. Pen-Vorrichtung nach Anspruch 1, 2 oder 3, wobei der Speicher so angeordnet ist, dass er ein Mehr-Bit-Wort enthält, das den Status eines Walzenschalters des Pens angibt.

5. Pen-Vorrichtung (6) nach einem der vorherigen Ansprüche mit einem Speicher, dessen Inhalt sich während des Gebrauchs verändert, wobei das genannte Mittel zum Umwandeln so angeordnet ist, dass der genannte Inhalt in einen seriellen Bitstrom umgewandelt wird.

6. Pen-Vorrichtung (6) nach einem der vorherigen Ansprüche mit einem logischen Verknüpfungsmittels zum Erzeugen einer Sequenz serieller Datenpakete, die jeweils Daten von dem Speicher und einen Kennzeichner für die Daten beinhalten.

7. Pen-Vorrichtung (6) nach Anspruch 6, bei der das genannte logische Verknüpfungsmittel so angeordnet ist, dass ein Paketabgrenzungscode zwischen jeweils zwei Pakete eingefügt wird.

8. Verfahren zum Betätigen eines Pens, **gekennzeichnet durch** die folgenden Schritte:
a) Speichern von Datenelementen, die den Batteriezustand und einen der folgenden Punkte angeben:
(i) eine Identifizierungsnummer,
(ii) eine Farbe oder
(iii) einen Druckwandlerausgang;
b) Erzeugen eines Paketpaares zu jedem Datenelement, umfassend serielle Daten, die das Datenelement und ein Identifikationspaket repräsentieren; und
c) wiederholtes Anlegen der Paketpaare, getrennt **durch** einen Paketabgrenzungscode, an die Spitze des genannten Pens (6).

## Revendications

1. Appareil de stylet (6) pour fournir un signal électrique de données et incluant un moyen de mémoire pour stocker des données et un moyen pour convertir les données stockées en un train binaire sériel, **caractérisé en ce que** la mémoire est arrangée pour contenir un mot multibit indiquant un état de pile.

2. Appareil de stylet (6) tel que revendiqué dans la revendication 1, et incluant un moyen pour transmettre le train binaire sériel à un récepteur.

3. Appareil de stylet (6) tel que revendiqué dans la revendication 1 ou 2, dans lequel la mémoire est arrangée pour contenir un mot multibit indiquant une pression appliquée à une pointe du stylet (6).

4. Appareil de stylet tel que revendiqué dans la revendication 1, 2 ou 3, dans lequel la mémoire est arrangée pour contenir un mot multibit indiquant l'état d'un commutateur de cylindre du stylet.

5. Appareil de stylet (6) tel que revendiqué dans l'une quelconque des revendications précédentes et incluant un moyen de mémoire dont le contenu change pendant l'utilisation, et dans lequel ledit moyen de conversion est arrangé pour convertir ledit contenu en un train binaire sériel.

6. Appareil de stylet (6) tel que revendiqué dans l'une quelconque des revendications précédentes et incluant un moyen de logique pour produire une séquence de paquets de données série incluant chacun des données de la mémoire et un identificateur pour les données.

7. Appareil de stylet (6) tel que revendiqué dans la revendication 6, dans lequel ledit moyen de logique est arrangé pour insérer un code de délimitation de paquets entre chaque paquet.

8. Méthode de fonctionnement d'un stylet, **caractérisée par** les étapes consistant à :
a) stocker des éléments de données indicatifs d'un état de pile et l'un quelconque de ce qui suit :
(i) un numéro d'identification,
ii) une couleur, ou
iii) une sortie de transducteur de pression;
b) pour chaque morceau de données, générer une paire de paquets, comprenant des données série représentant le morceau de données et un paquet d'identification; et
c) appliquer de manière itérative les paires de paquets, séparés par un code de délimitation de paquets, à la pointe dudit stylet (6).
